# EUROPÄISCHE PATENTSCHRIFT

(11) **EP 1 963 100 B1**
(45) Veröffentlichungstag und Bekanntmachung des Hinweises auf die Patenterteilung: **02.04.2014**
(21) Anmeldenummer: 06818064.5
(22) Anmeldetag: 09.11.2006
(51) Int. Cl.: B32B 37/12, B32B 37/18

(54) **VERFAHREN UND VORRICHTUNG ZUM AUFBRINGEN EINER FOLIE AUF EINEN TRÄGER**
METHOD AND DEVICE FOR APPLYING A FILM TO A CARRIER
PROCEDE ET DISPOSITIF PERMETTANT D'APPLIQUER UN FILM SUR UN SUPPORT

(30) Priorität: 23.12.2005 DE 102005062396
(43) Veröffentlichungstag der Anmeldung: 03.09.2008
(60) Teilanmeldung: 12166479.1
(73) Patentinhaber: Atlantic Zeiser GmbH, 78576 Emmingen (DE)
(72) Erfinder: BERNDTSSON, Anders, CH-8260 Stein am Rhein (CH)
(74) Vertreter: Ullrich & Naumann
(86) Internationale Anmeldenummer: PCT/DE2006/001965
(87) Internationale Veröffentlichungsnummer: WO 2007/076738

(56) Entgegenhaltungen:
- WO-A-01/87599
- WO-A-2004/011256
- US-A1- 5 466 013
- US-A1- 2002 027 586

## Beschreibung

Die Erfindung betrifft ein Verfahren nach dem Oberbegriff des Patentanspruchs 1. Des Weiteren betrifft die Erfindung eine Vorrichtung nach dem Oberbegriff des nebengeordneten Patentanspruchs 4.

Es geht hier grundsätzlich um die Verarbeitung jedweder flächiger Träger bzw. Substrate, die zum Schutz darauf befindlicher Informationen zumindest partiell mit einer Folie überzogen bzw. beschichtet werden. Dabei kann es sich um sogenannte Kunststoffkarten handeln, wie sie beispielsweise als permanente Eintrittskarten mit zusätzlichem Magnetstreifen, Transponder oder dgl. Verwendung finden. Mittlerweile nutzen unterschiedlichste Einrichtungen und Organisationen entsprechende Karten, beispielsweise Banken, Videotheken, Buchclubs, Fitnesscenter, etc.

Regelmäßig werden Karten der hier in Rede stehenden Art mit Informationen jedweder Art bedruckt. Im einfachsten Falle mittels Drucker oder Kopiergerät. An dieser Stelle sei angemerkt, dass es sich bei den mit der Information zu versehenen Trägern nicht unbedingt um Kunststoffkarten handeln muss. Im einfachsten Fall kann es sich dabei um Papier- oder Karton-Karten handeln, die bedruckt und anschließend mit Kunststoff überdeckt oder in Kunststoff eingeschweißt werden.

Der voranstehend genannte Stand der Technik ist aus der Praxis hinlänglich bekannt. Üblicherweise wird der Träger nach dem Bedrucken und/oder nach Ausstattung mit sonstigen optisch und/oder elektronisch lesbaren Informationen mit einer durchsichtigen Folie abgedeckt. Um diese Folie irreversibel auf den Träger aufzubringen, wird ein Verfahren angewandt, wonach ein durchsichtiger Schmelzklebstoff bei recht hoher Temperatur zwischen dem Träger und der Folie adhäsiv wirkt. Meist befindet sich der durchsichtige Klebstoff auf der Folie, die unter Temperatur- und Druckeinwirkung auf den Träger aufgepresst wird.

Die Anwendung relativ hoher Temperaturen ist in der Praxis jedoch problematisch, da die dadurch erzielte Haftung aufgrund der sich einstellenden Grenzflächenenergie oft nur unzureichend ist. Außerdem wird durch das Aufheizen wie auch durch das Abkühlen insbesondere die automatische Fertigung verlangsamt. So handelt es sich bei der Erwärmung und beim Abkühlen um zeitkritische Verfahrensschritte, die außerdem einen ganz erheblichen apparativen Aufwand erfordern. Ein laminierter Träger bzw. eine so hergestellte beschichtete Kunststoffkarte kann erst nach dem Abkühlen gehandhabt werden. Auch bei einer Einzelfertigung, so bspw. in einer Videothek, ist dies problematisch, verursacht das Aufheizen und Abkühlen erhebliche Wartezeiten. Außerdem besteht bei Temperaturanwendung jedenfalls dann eine Verletzungsgefahr, wenn die dazu dienende Vorrichtung unsachgemäß bedient wird. Schließlich ist der Energieverbrauch einer entsprechenden Vorrichtung erheblich.

Aus der DE 28 17 917 A1 ist ein gattungsbildendes Verfahren bekannt. Es handelt sich um ein Verfahren zur Kaschierung eines Trägermaterials, wie bspw. Schallplattentaschen, Buchhüllen, Buchumschläge oder dergleichen, sowie ein Verfahren zur Herstellung dieser Kaschierung und um eine Vorrichtung zur Durchführung des Verfahrens, wobei das Trägermaterial zunächst endlos kaschiert und nach der Kaschierung konfektioniert wird.

Das bekannte Verfahren bietet den Vorteil, endloses Trägermaterial vollständig zu kaschieren und es im Nachhinein einfach und schnell zuzuschneiden. Problematisch an diesem Verfahren ist jedoch die Verwendung von Trägermaterial, welches punktgenau bedruckt und Beschichtet werden muss, wie beispielsweise Zugangsberechtigungskarten mit Transpondern, Magnetstreifen oder dgl. Eine punktgenaue Synchronisierung von Trägermaterial und Folie ist nicht vorgesehen, da es sich sowohl bei dem Trägermaterial als auch bei der Folie um eine endlose Zuführung handelt. Damit ermöglicht das in Rede stehende Verfahren ausschließlich vollflächige Kaschierungen, nicht etwa eine partielle Beschichtungen.

Ein weiteres Problem des bekannten Verfahrens besteht darin, dass sich nicht alle Materialien als Trägermaterial für die Verarbeitung nach dem Verfahren eignen. Besonders wenig flexible Materialien - wie beispielsweise festere und steifere Kunststoffe - sind gänzlich ungeeignet für eine endlose Zuführung. Des Weiteren ist bei solchen Trägermaterialien oftmals eine aufwendigere Bearbeitung der Schnittkanten erforderlich. Ein bereits aufgetragener Druck oder eine Kaschierung beeinträchtigen dabei die Schnittkantenqualität und damit die Qualität des Drucks und der Beschichtung an den Rändern der Karte.

Ferner ist es für den Anwender des bekannten Verfahrens von großem Nachteil, zwangsläufig die Konfektionierung der Karten durchführen zu müssen. Kostengünstige Karten anderer Anbieter können somit nicht zur Weiterverarbeitung verwendet werden, da das Verfahren keine einzelnen Karten zu handhaben vermag.

Aus der WO 01/87599 A1 ist, für sich gesehen, ein Verfahren zum Aufbringen einer Folie auf einen Papierbogen bekannt, wobei die Bögen einander überlappend kaschiert werden. Anschließend findet ein Trennen bzw. Auseinanderschneiden statt, wobei vor dem Schneiden Überlappungskanten detektiert werden.

Bei dem bekannten Verfahren ist wesentlich, dass die zur Kaschierung dienende Folie einseitig mit Klebstoff beschichtet und danach über eine Kaschierwalze auf die einander überlappenden Papierbögen aufgebracht wird. Dies ist in der Handhabung der Folie aufwändig, zumal die Folie in sich wenig Stabilität bzw. Steifigkeit hat. Will man die Folie mit einem Haftvermittler beschichten, ist eine besondere aufwändige Mimik erforderlich, um nämlich beim Beschichten einen Gegendruck auf der der Beschichtungsseite abgewandten Seite der Folie zu erzeugen. Außerdem besteht die Gefahr der Beschädigung der Folie, jedenfalls dann, wenn es sich dabei um eine äußerst dünne Folie handelt.

Schließlich ist die Handhabung der bereits beschichten Folie, aufgrund ihrer nur geringen Formstabilität, abermals aufwändig, so dass es zwingend erforderlich ist, die mit Haftvermittler beschichtete Folie unverzüglich der Fügestation bzw. der Kaschierungsstation zuzuführen.

Der vorliegenden Erfindung liegt daher die Aufgabe zugrunde, das zuvor erörterte gattungsbildende Verfahren derart auszugestalten und weiterzubilden, dass mit geringstmöglichem konstruktivem Aufwand eine Fertigung vorkonfektionierter bedruckter Karten möglich ist, und zwar ungeachtet des bekannten Trägermaterials. Des Weiteren soll eine Vorrichtung zur Anwendung des erfindungsgemäßen Verfahrens angegeben werden.

Die voranstehende Aufgabe wird erfindungsgemäß durch ein Verfahren mit den Merkmalen des Patentanspruchs 1 gelöst. Außerdem wird die voranstehende Aufgabe durch eine Vorrichtung mit den Merkmalen des Patentanspruchs 4 gelöst.

Entsprechend den Merkmalen des Patentanspruchs 1 ist das erfindungsgemäße Verfahren dadurch gekennzeichnet, dass der Träger als vorkonfektionierte bedruckte Karte zur Verfügung gestellt wird.

Zunächst einmal wird der mit der Folie zumindest teilweise zu beschichtende bzw. zu überdeckende Träger bereitgestellt, wobei es sich bei dem Träger - entsprechend den voranstehenden Ausführungen - um eine Karte, handeln kann. Die Karte kann wiederum als Kunststoff-, Papier- oder Kartonkarte ausgeführt sein. Der Träger wird wie auch immer bereitgestellt, so bspw. aus einem Magazin bzw. Depot heraus. Von dort aus wird er entsprechend dem Bedarf gefördert.

In einem nächsten Schritt wird der Träger oder die Folie mit einer dünnen Schicht eines transparenten Haftvermittlers beschichtet, wobei der Haftvermittler unter Einwirkung elektromagnetischer Wellen aushärtet. Es ist durchaus auch denkbar, dass sowohl der Träger als auch die Folie mit dem Haftvermittler beschichtet werden, wobei es sich bei dem Haftvermittler auch um einen Zweikomponentenklebstoff handeln kann und wobei die beiden Komponenten unter Einwirkung elektromagnetischer Wellen miteinander reagieren können.

Alternativ ist es denkbar, eine bereits mit dem transparenten Haftvermittler beschichtete Folie bereitzustellen, wobei auch dort der Haftvermittler unter Einwirkung elektromagnetischer Wellen aushärtet.

An dieser Stelle sei angemerkt, dass der Haftvermittler grundsätzlich unter Einwirkung elektromagnetischer Wellen aushärtet, wobei es sich dabei insbesondere um eine Lichteinwirkung handelt. In Abgrenzung zu der Aushärtung durch Temperatureinwirkung sei angemerkt, dass es hier um eine Einwirkung ohne Temperaturerhöhung oder bei nur geringer Temperaturerhöhnung des Trägers geht. Insoweit unterscheidet sich das Verfahren von einem herkömmlichen Verfahren unter Anwendung hoher Temperaturen.

Wesentlich ist, dass der Träger und die Folie - in welcher geometrischen Anordnung auch immer - zusammengebracht werden. Im zusammengebrachten Zustand findet ein Verkleben zwischen der Folie und dem Träger statt, wobei der Haftvermittler unter Einwirkung elektromagnetischer Wellen aushärtet. Eine irreversible Abdeckung des Trägers durch die Folie ist geschaffen, wobei die auf dem Träger befindlichen Informationen durch die transparente Folie hindurch sichtbar sind.

Es sei weiter angemerkt, dass es sich bei dem Haftvermittler um einen Klebstoff jedweder Art handeln kann der beispielsweise unter Lichteinwirkung aushärtet. So handelt es sich bei dem Haftvermittler um einen Klebstoff, der - mehr oder weniger - im kalten Zustand aushärtet, im Gegensatz zu den aus der Praxis bekannten Anwendungen, wonach der Haftvermittler unter Temperatureinfluss aushärtet.

Des Weiteren ist es denkbar, dass die Folie den Träger insgesamt, d.h. vollflächig, überdeckt. Ebenso ist es jedoch auch möglich, die Folie nur bereichsweise auf den Träger aufzubringen. Auch lassen sich mit dem Material der Folie entsprechende Muster bzw. Konturen realisieren. Des Weiteren lässt sich die Folie mit Aussparungen auf den Träger aufbringen, und zwar entsprechend dem jeweiligen Bedarf.

Die zu Grunde liegende Aufgabe ist zur Anwendung des erfindungsgemäßen Verfahrens durch eine Vorrichtung gemäß dem nebengeordneten Patentanspruch 4 gelöst. Eine solche Vorrichtung umfasst eine Klebestation, in der der Träger und/oder die Folie mit einer dünnen Schicht eines transparenten, unter Einwirkung elektromagnetischer Wellen aushärtenden Haftvermittlers, zumindest partiell beschichtet wird. Des Weiteren gehört zu der Vorrichtung eine Fügestation, in der der Träger und die Folie zusammengebracht werden. In einer sich daran anschließenden Härtestation härtet der Haftvermittler unter Einwirkung elektromagnetischer Wellen aus. Die Vorrichtung ist dadurch gekennzeichnet, dass es sich bei dem Träger um eine vorkonfektionierte, bedruckte Karte handelt, wobei die Karte aus einem Magazin zu den Stationen gefördert wird.

Zum Bereitstellen des Trägers wird in vorteilhafter Weise die Karte linear zu den Stationen gefördert.

Zum Bereitstellen der Folie ist ein vorzugsweise als Rolle ausgeführtes Magazin vorgesehen, aus dem die Folie vorzugsweise auf einem bandförmigen Folienträger abwickelbar und den Stationen zuführbar ist.

Des Weiteren sei angemerkt, dass durch eine besondere Zuführung von Träger und Folie eine komplette oder partielle Beschichtung des Trägers mit der Folie realisierbar ist, nämlich dadurch, dass man den Träger und die Folie - bewusst - mit Versatz zueinander in die Fügestation fördert und entsprechend - einander teilweise überdeckend - kombiniert. Des Weiteren sei angemerkt, dass auch der Träger bzw. das Substrat in Form eines Endlosbandes gefördert werden kann, wobei vor oder in der Fügestation ein Zuschnitt erfolgt. Ebenso ist es dankbar, den Träger bzw. das Substrat auf einem bandförmigen Träger - bereits vorkonfektioniert - zur Verfügung zu stellen.

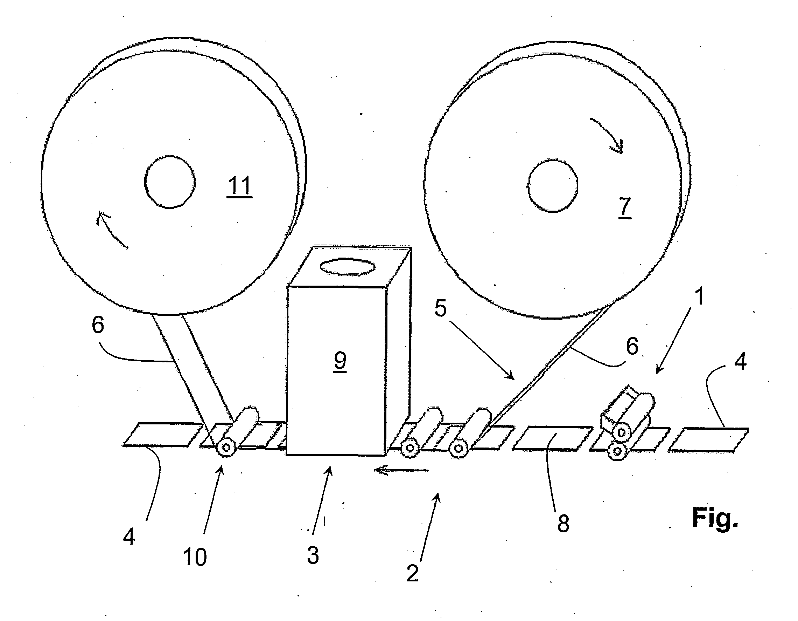

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung eines Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigt
- die einzige Fig.: in einer schematischen Ansicht die grundsätzliche Anordnung einer erfindungsgemäßen Vorrichtung, mit der sich das erfindungsgemäße Verfahren erläutern lässt.

Gemäß der einzigen Fig. umfasst die erfindungsgemäße Vorrichtung eine Klebestation 1, eine Fügestation 2 und eine Märtestation 3.

Des Weiteren lässt die einzige Fig. erkennen, dass die zur Beschichtung der Karte 4 dienende Folie 5 über ein Folienband 6 bereitgestellt wird, welches von der zur Bevorratung der Folie 5 dienenden Rolle 7 abgewickelt wird. Von dort aus gelangt das Folienband 6 bzw. die darauf befindliche Folie 5 unmittelbar zu der Fügestation 2.

Die Karte 4 wird bei dem hier gezeigten Ausführungsbeispiel linear zu der Klebestation 1 gefördert, wird dort an seiner Oberfläche mit dem durchsichtigen Haftvermittler 8 drucktechnisch beschichtet und wird von dort aus der Fügestation 2 zugeführt, in der die Kombination der Karte 4 mit der Folie 5 erfolgt.

Nach dem Aufbringen der Folie 5 auf die Karte 4 (mit dem dazwischen befindlichen Haftvermittler 8) wird die so entstandene Anordnung verpresst.

Anschließend erfolgt in der Härtestation 3 eine Bestrahlung durch eine UV-Licht-quelle 9. Dort härtet der Haftvermittler 8 unter Bindung der Folie 5 an die Karte 4 aus, so dass in einer nachgeschalteten Trennstation 10 das Folienband 6 von der Folie 5 bzw. der Karte 4 durch Umlenkung abhebbar ist. Von dort aus gelangt das Folienband 6 auf eine zur Entsorgung dienende Rolle 11, mit der das aufgewickelte Folienband 6 entsorgt werden kann. Die mit der Folie 5 beschichtete Karte 4 wird zur weiteren Bearbeitung und/oder Handhabung weiter gefördert.

Im Hinblick auf weitere Merkmale, die sich der einzigen Fig. nicht entnehmen lassen, sei zur Vermeidung von Wiederholungen auf den allgemeinen Teil der Beschreibung und auf die Patentansprüche verwiesen.

Schließlich sei angemerkt, dass das voranstehend erörterte Ausführungsbeispiel der beispielhaften Erörterung der beanspruchten Lehre dient, diese jedoch nicht auf das Ausführungsbeispiel einschränkt.

## Patentansprüche

1. Verfahren zum Aufbringen einer Folie auf einen Träger, wobei der Träger irreversibel mit der Folie zumindest partiell überzogen wird, mit folgenden Verfahrensschritten:
Bereitstellen des Trägers,
Beschichten des Trägers mit einer dünnen Schicht eines transparenten, unter Einwirkung elektromagnetischer Wellen aushärtenden Haftvermittlers, Zusammenbringen von Träger und Folie und
Aushärten des Haftvermittlers unter Einwirkung elektromagnetischer Wellen, insbesondere unter Lichteinwirkung,
**dadurch gekennzeichnet, dass** der Träger als vorkonfektionierte bedruckte Karte zur Verfügung gestellt wird.

2. Verfahren nach Anspruch 1, **dadurch gekennzeichnet, dass** die bedruckte Karte aus Papier, Karton oder Kunststoff hergestellt ist.

3. Verfahren nach Anspruch 1 oder 2, **dadurch gekennzeichnet, dass** die Folie insgesamt, d.h. vollflächig, bereichsweise, in bzw. mit Mustern oder mit Aussparungen auf den Träger aufgebracht wird.

4. Vorrichtung zum Aufbringen einer Folie (5) auf einen Träger, bspw. auf eine Kunststoffkarte, wobei der Träger irreversibel mit der Folie (5) zumindest partiell überzogen wird, mit einer klebestation (1), in der der Träger und/oder die Folie (5) mit einer dünnen Schicht eines transparenten, unter Einwirkung elektro-magnetischer Wellen aushärtenden Haftvermittlers (8), beschichtet wird, mit einer Fügestation (2), in der der Träger und die Folie (5) zusammengebracht werden und mit einer Härtestation (3), in der der Haftvermittler (8) unter Einwirkung elektromagnetischer Wellen, insbesondere unter Lichteinwirkung, aushärtet, zur Anwendung des Verfahrens nach einem der Ansprüche 1 bis 3, **dadurch gekennzeichnet, dass** es sich bei dem Träger um eine vorkonfektionierte, bedruckte Karte (4) handelt, wobei die Karte (4) aus einem Magazin zu den Stationen gefördert wird.

5. Vorrichtung nach Anspruch 4, **dadurch gekennzeichnet, dass** die Karte (4) vorzugsweise linear aus dem Magazin zu den Stationen förderbar ist.

6. Vorrichtung nach Anspruch 4 oder 5, **dadurch gekennzeichnet, dass** zum Bereitstellen der Folie (5) ein vorzugsweise als Rolle ausgeführtes Magazin vorgesehen ist, aus dem die Folie (5) vorzugsweise auf einem bandförmigen Folienträger abwickelbar und den Stationen zuführbar ist.

## Claims

1. Method for applying a film to a carrier, wherein the carrier is irreversibly coated at least partially with the film, having the following process steps:
provision of the carrier,
coating of the carrier with a thin layer of a transparent adhesion promoter that cures under the action of electromagnetic waves,
bringing the carrier and the film together, and
curing the adhesion promoter under the action of electromagnetic waves, in
particular under the action of light,
**characterised in that** the carrier is made available in the form of a pre-produced printed card.

2. Method according to claim 1, **characterised in that** the printed card is produced from paper, cardboard or plastics material.

3. Method according to claim 1 or 2, **characterised in that** the film is applied to the carrier overall, that is to say over the entire surface, in places, in or with patterns or with cutouts.

4. Device for applying a film (5) to a carrier, for example to a plastics card, wherein the carrier is irreversibly coated at least partially with the film (5), having an adhesive station (1), in which the carrier and/or the film (5) is coated with a thin layer of a transparent adhesion promoter (8) that cures under the action of electromagnetic waves, having a joining station (2), in which the carrier and the film (5) are brought together, and having a curing station (3), in which the adhesion promoter (8) cures under the action of electromagnetic waves, in particular under the action of light, for application of the method according to any one of claims 1 to 3, **characterised in that** the carrier is a pre-produced printed card (4), wherein the card (4) is fed to the stations from a magazine.

5. Device according to claim 4, **characterised in that** the card (4) is fed from the magazine to the stations preferably linearly.

6. Device according to claim 4 or 5, **characterised in that** there is provided for supplying the film (5) a magazine preferably in the form of a roll, from which the film (5) can be unwound preferably on a band-like film carrier and can be fed to the stations.

## Revendications

1. Procédé permettant d'appliquer un film sur un support, dans lequel le support est recouvert au moins partiellement par le film de façon irréversible, comprenant les étapes de procédé suivantes :
- préparation du support,
- revétement du support avec une couche mince d'un agent d'accrochage transparent durcissant sous l'effet d'ondes électromagnétiques,
- assemblage du support et du film, et
- durcissement de l'agent d'accrochage sous l'effet d'ondes électromagnétiques, en particulier sous l'effet de la lumière,
**caractérisé en ce que** le support est fourni sous forme de carte imprimée préalablement confectionnée.

2. Procédé selon la revendication 1, **caractérisé en ce que** la carte imprimée est fabriquée à partir de papier, de carton ou de plastique.

3. Procédé selon la revendication 1 ou 2, **caractérisé en ce que** le film est appliqué sur le support dans son ensemble, c'est-à-dire sur sa surface complète, ou avec des motifs ou avec des évidements.

4. Dispositif permettant d'appliquer un film (5) sur un support, par exemple sur une carte en plastique, étant entendu que le support est recouvert au moins partiellement par le film (5) de façon irréversible, comprenant une station de collage (1) dans laquelle le support et/ou le film (5) sont revêtus avec une couche mince d'un agent d'accrochage transparent (8) durcissant sous l'effet d'ondes électromagnétiques, comprenant une station de jonction (2) dans laquelle le support et le film (5) sont assemblés et comprenant une station de durcissement (3) dans laquelle l'agent d'accrochage (8) durcit sous l'effet d'ondes électromagnétiques, en particulier sous l'effet de la lumière, permettant de mettre en oeuvre le procédé selon l'une des revendications 1 à 3, **caractérisé en ce que** le support est une carte imprimée préalablement confectionnée (4), étant entendu que la carte (4) est amenée dans les stations à partir d'un magasin.

5. Dispositif selon la revendication 4, **caractérisé en ce que** la carte (4) peut de préférence être amenée dans les stations de façon linéaire à partir du magasin.

6. Dispositif selon la revendication 4 ou 5, **caractérisé en ce que** pour fournir le film (5), il est prévu un magasin réalisé de préférence sous forme de rouleau, à partir duquel le film (5) peut de préférence être déroulé et transporté jusqu'aux stations sur un support de film en forme de bande.
